# EUROPEAN PATENT SPECIFICATION

(11) **EP 2 161 769 B1**
(45) Date of publication and mention of the grant of the patent: **20.06.2012**
(21) Application number: 09005785.2
(22) Date of filing: 24.04.2009
(51) Int. Cl.: H01M 2/06, H01M 2/08, H01M 2/10, H01M 2/22, H01M 2/30, H01M 10/12

(54) **Replaceable and versatile hermetically sealed lead-acid rechargeable cell**
Austauschbarer und vielseitig einsetzbarer, hermetisch versiegelter Bleiakkumulator
Accumulateur au plomb-acide remplacable, polyvalent et hermétiquement fermé

(30) Priority: 26.08.2008 CN 200820189123 U
(43) Date of publication of application: 10.03.2010
(73) Proprietor: Guangzhou Kaijie Power Supply Industrial Co., Ltd, Guangdong Province 510080 (CN)
(72) Inventor: Chen, Ronghua, Huadu District 510080 Guangzhou City Guangdong Province 510080 (CN); CHONG CHIN SIONG, Xinhua, Huadu, Guangzhou (CN); WATTERSON JR Gerald Edward, Xinhua, Huadu, Guangzhou (CN)
(74) Representative: Graf von Stosch, Andreas

(56) References cited:
- EP-A- 0 789 411
- JP-A- 2003 068 274
- US-A- 4 752 545
- US-B1- 6 521 371
- US-B1- 7 101 640

## Description

### Field of the invention

The invention relates to a lead-acid rechargeable cell used for motorcycles.

### Background of the invention

Presently, there are various types and specifications of motorcycles in the world marketplace. A motorcycle of specific type has specific requirements for performance and assembling size of the lead-acid cell however, thus cells of different specifications are needed to match a specific motorcycle. Motorcycle manufacturers suffer from drawbacks such as difficulty in production and management as well as inconvenience in product marketing, as the manufacturers have to accommodate all kinds of cells which are required in the marketplaces and which have numerous types and specifications.

### Summary of the invention.

One object of the inventions is to overcome disadvantages of prior art and also provide a lead-acid cell capable of matching various specifications of motorcycles.

To reach the above object, a replaceable and versatile hermetical lead-acid cell according to claim 1 is provided, which comprises a top cover and a casing. The top cover has a cap disposed at its top portion. The top cover and casing are sealed together by resin sealable glue filled therebetween. Plural electrode plates, between which dilute sulfuric acid is filled, are positioned in the casing. In addition, a divider is placed between every two electrode plates. Four electrode terminal posts are further provided at the top portion of the top cover and are adjacent to four corners of the top cover.

The invention can obtain advantages such as those listed below. For example, one cell can provide four electrode terminal posts, thereby being capable of accommodating two kinds of products which require "negative at left side and positive at right side" and "positive at left side and negative at right side" electrical connection respectively. The four electrode terminal posts each are connected with a copper strap and embedded into the plastic top cover of the cell, thereby effectively avoiding erosion of the copper strap due to contact with the dilute sulfuric acid. Moreover, the copper strap is of an "L" shape which enables to provide kinds of terminal connection for cells. Compared to conventional electrode plates, according to the invention, the electrode plates of the cell can get a height improvement of more than 10mm, since electrode terminal posts are hermetically enclosed in the top cover.

The invention will be described below in more detail with reference to the accompanying drawings.

### Description of drawings

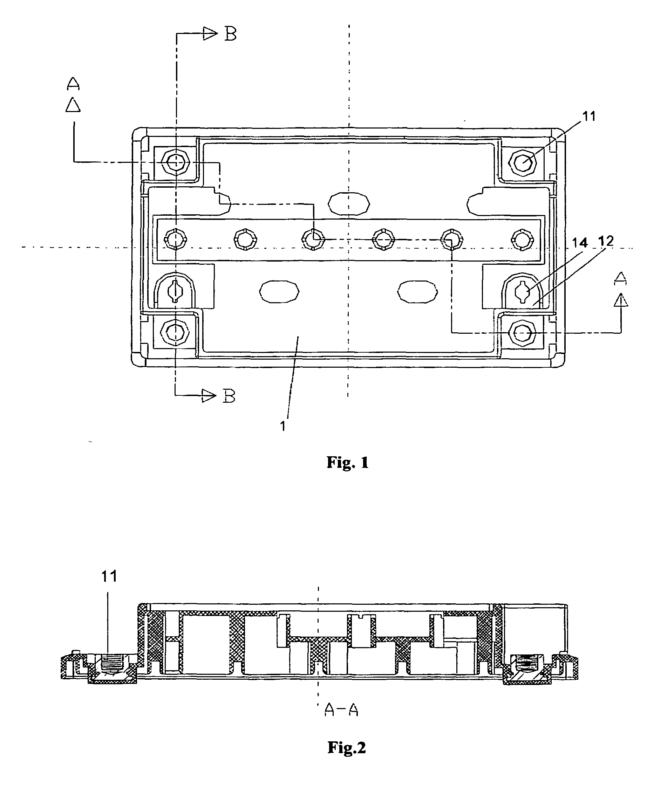

Fig.1 shows a top plan view of a top cover of a replaceable and versatile hermetic lead-acid cell;
Fig.2 shows a cross-sectional view of the construction illustrated in Fig.1 along line A-A;

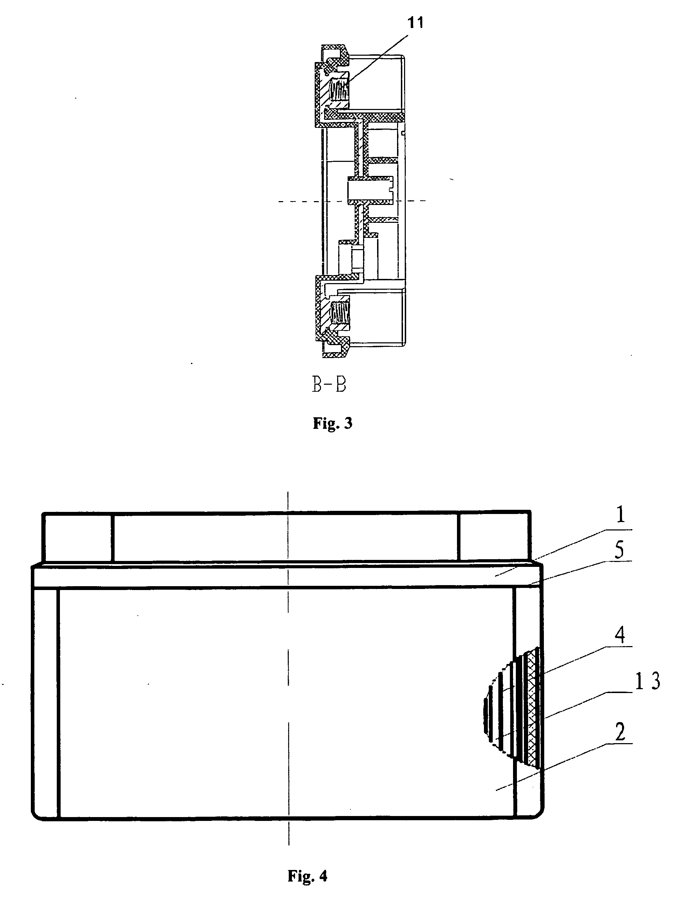

Fig.3 shows a cross-sectional view of the construction illustrated in Fig.1 along line B-B;
Fig.4 illustrates a front view of the replaceable and versatile hermetic lead-acid cell;

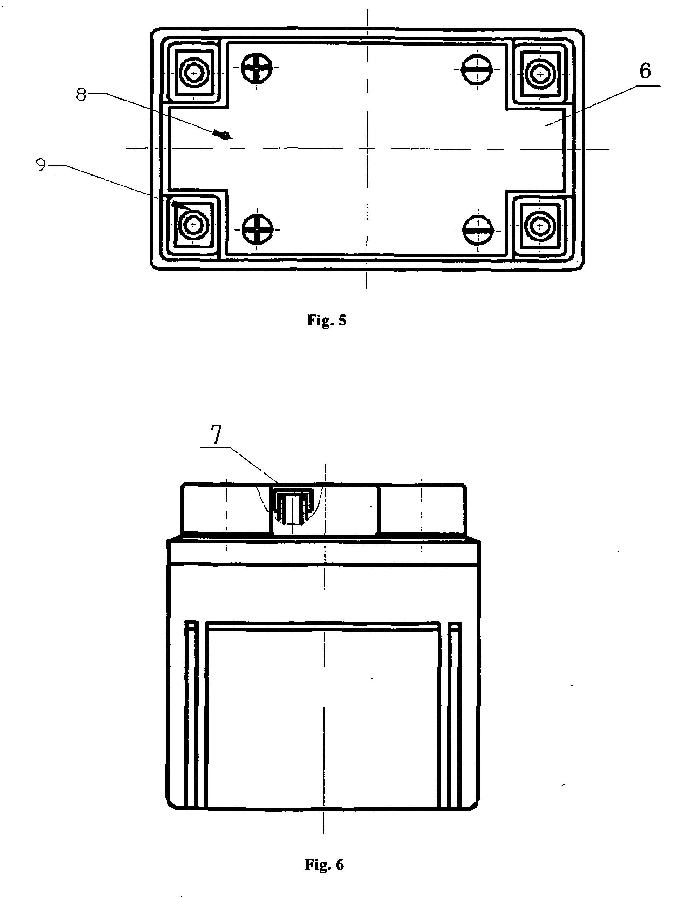

Fig.5 shows a bottom plan view of the construction denoted in Fig.4;
Fig.6 shows a right view of the construction denoted in Fig.4;
Figs.7A-7B show structure of a copper element disposed in the top cover respectively;
Fig.8 shows a cross-sectional view of the copper element disposed in the top cover;
Fig.9 shows a front view of an L-shaped terminal stud;
Fig. 10 shows a top plan view of the L-shaped terminal stud;
Fig.11 shows a left view of the L-shaped terminal stud;
Fig. 12 shows a front view of a first height enhancement plate fitted into the bottom portion of the cell;
Fig.13 shows a top cross-sectional view the first height enhancement plate fitted into the bottom portion of the cell;
Fig.14 shows a left cross-sectional view the first height enhancement plate fitted into the bottom portion of the cell;
Fig.15 shows a front view of a second height enhancement plate fitted with the first height enhancement plate illustrated in Fig.12;
Fig.16 shows a top cross-sectional view of the second height enhancement plate fitted with the first height enhancement plate illustrated in Fig.12; and
Fig.17 shows a left cross-sectional view of the second height enhancement plate fitted with the first height enhancement plate illustrated in Fig.12.

### Preferred embodiment of the invention

According to one embodiment of the invention, a replaceable and versatile hermetical lead-acid cell is provided, which comprises a top cover 1 and a casing 2. The top cover 1 has a cap 6 disposed at its top portion. The top cover 2 and casing 2 are sealed together by resin sealable glue filled therebetween. The casing 2 may take a cubical shape. Plural electrode plates 4, between which dilute sulfuric acid is filled, are positioned in the casing 2. In addition, an AGM divider 13 is placed between every two electrode plates 4.

Further, four electrode terminal posts 11 are further provided at the top portion of the top cover 1 and are adjacent to four corners of the caps 6. The four electrode terminal posts 11 include two positive electrode terminal posts 11 and two negative electrode terminal posts 11. Among these posts 11, two positive electrode terminal posts 11 may be disposed at a pair of adjacent corners, while the other two negative electrode terminal posts 11 are disposed at the rest two adjacent corners.

Every two electrode terminal posts 11 and a copper element 12 form an integral construction, and red-black electrode glue 9 is injected into locations around each electrode terminal post 11. A mounting aperture 14 is defined at each corner of the top cover 1, and an O-shaped seal ring (not shown) is disposed into the aperture 14. A corresponding lead electrode terminal post 11 described above extends through corresponding mounting aperture 14 and respective seal ring. Regions where the electrode terminal post, the mounting aperture 14 and respective seal ring contact are covered by epoxy sealable glue.

Moreover, the electrode terminal post disposed at the surface of the top cover 1 and the copper element 12 are welded together at a top surface of the aperture 14 with epoxy sealable glue coated on the welding region. A safety valve 7 is provided into the top cover 1. A vent plate 8 is placed on each cap 6.

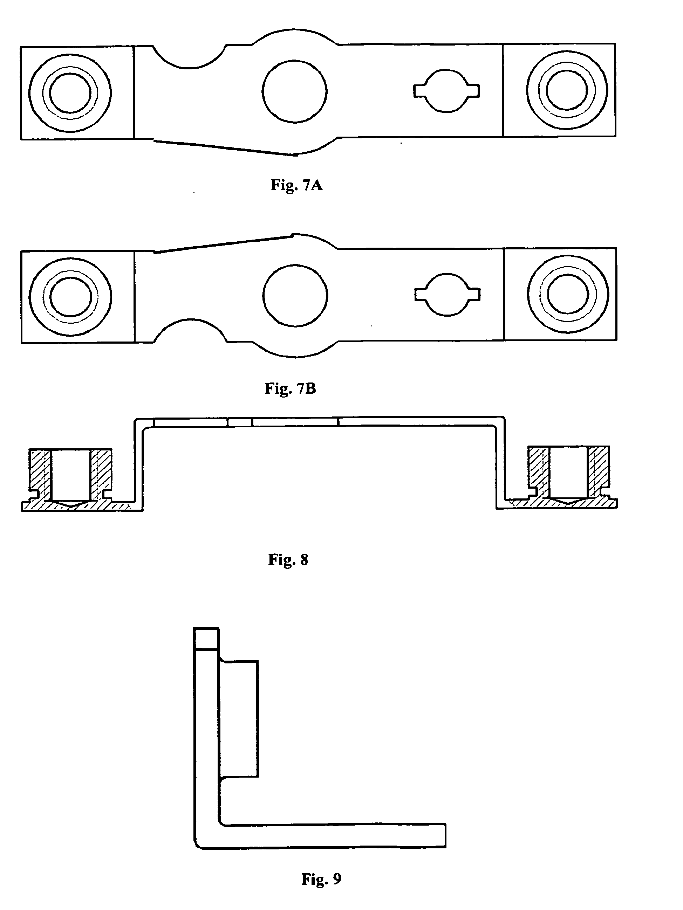

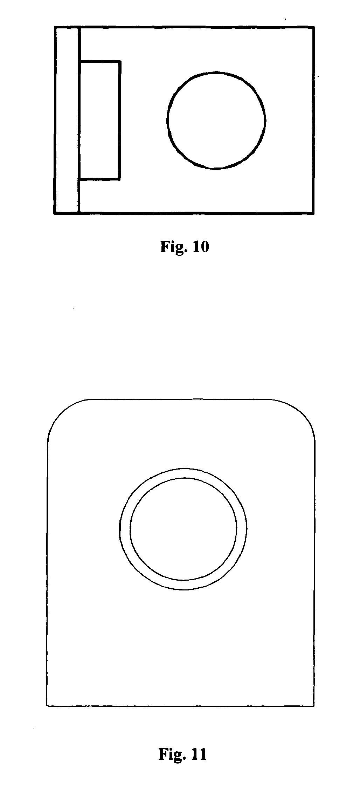

Each electrode terminal post 11 has an L-shaped movable connective terminal stud (see Figs.9-11) disposed thereon. The terminal stud includes two tabs which are bended relative each other a certain angle e.g. 90 degrees. Each tab has a circular hole defined therein. One hole is secured with the electrode terminal post 11, while the other hole can be used to secure with terminals of a motorcycle, hence making it possible for the cell to supply power to the motorcycle.

In case that the motorcycle of a user has a configuration in which the terminals of the motorcycle are connected and secured with the cell by top-bottom manner, the terminals of the motorcycle for connecting the cell can connect with the circular studs of the cell directly without the terminal studs. Otherwise the terminal studs are used in case that the terminals of the motorcycle for matching the cell are to connect with the cell by side-securing manner. That is, the terminal studs are mounted to the electrode terminal posts 11 of the cell at first, and then the motorcycle is secured to a hole defined in one tab of the terminal stud. Meanwhile, the electrode terminal post 11 can be designed to have enough space thereabout, thereby ensuring that the terminals of the motorcycle can placed at front or side. This configuration can meet various cell terminal connection requirements.

Not only the capacity but also the volume ratio energy of the cell is improved by the invention. Consequently, the lifespan of the cell is extended, and the cell with large size or with high capacity requirement can be replaced by the cell with small size yet high energy. This improvement is obtained by the following technical scheme. A lead-terminal post capable of receiving an "O"-shaped seal ring therein is disposed at the top portion of the top cover 1 of the cell. After the lead-terminal post extends through the mounting aperture 14, the "O"-shaped seal ring is snuggly fitted with the lead-terminal post at an internal location. The outer portion of the "O"-shaped seal ring suitably matches the mounting aperture 14 defined at the top portion of the top cover 1. After that, corresponding regions of the front portion of the top cover 1 of the cell is coated with dedicated epoxy sealable glue to form hermetical structure. Finally, the lead-terminal post and the copper element inside the top cover 1 of the cell are welded with each other to form welding points. By this process, acid inside the cell will be prevented from flowing along the lead-terminal then running on the copper strap, thus avoiding erosion of the copper strap. Additionally, welding reliability between the lead-terminal and the copper strap is also secured.

Compared to conventional electrode plates, according to the invention, the electrode plates 4 of the cell can get a height improvement of more than 10 mm, since electrode terminal posts are hermetically enclosed in the top cover 1. In other words, surface area of the electrode plate 4 is increased substantially compared to convention electrode plate and as a result, amount of active substance existing on the surface of the electrode plate 4 will be increased, thereby obtaining benefits such as capacity improvement. Here is an example. There is a type of cell with an external size (length X width X height) of 151X87X160 (mm) and named "YTX16-BS". Capacity per 10 hour of the cell is normally 14-16Ah and height of the electrode plate 4 inside the cell is only up to 106 mm. After utilization of the invention, the cell is maintained in external size, but its electrode plate 4 can become 123 mm high. In addition, capacity per 10 hour rises to 18A, and average capacity of the cell is improved by 20%. It is clear that the effect of the invention is very obvious.

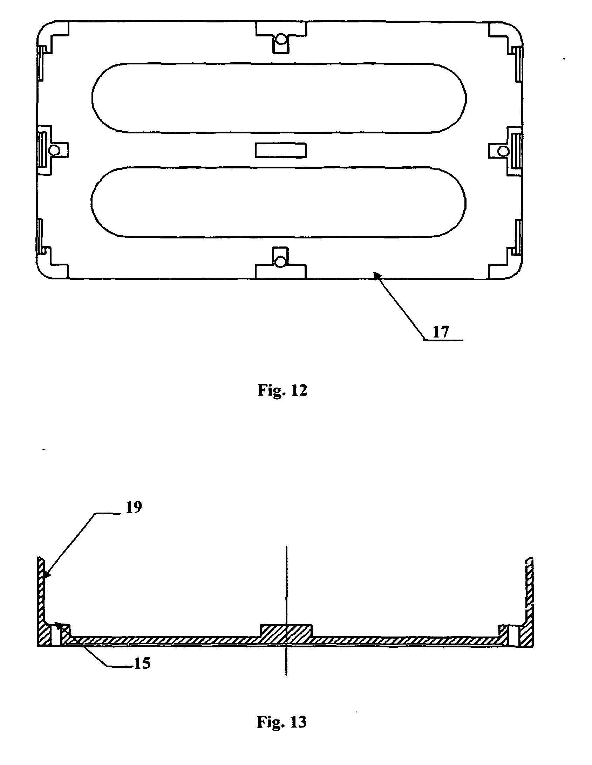

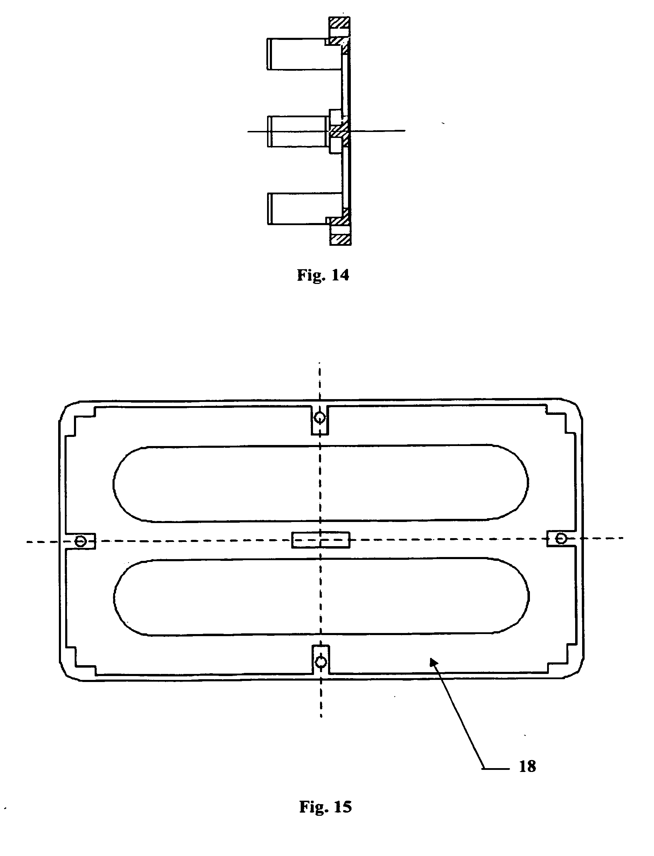

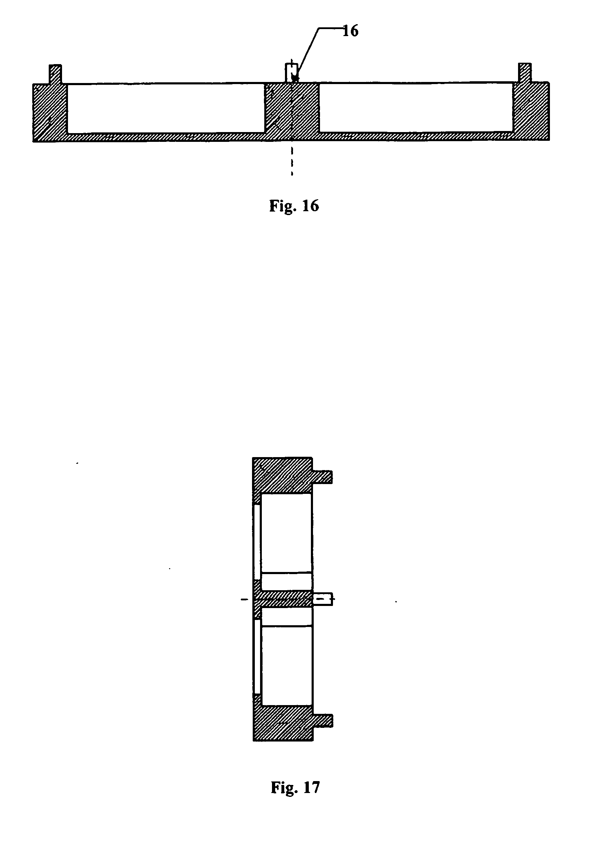

For those cells with similar size and height difference of only 10-20 mm, a height enhancement plate is additionally disposed into the cell (for example disposed at the bottom of the casing 2) to improve adaptability between the cell and motorcycle. The height enhancement plate will function when high profile cell is taken. Two height enhancement plates are used to adjust total height of the cell according to assembling requirements of the motorcycle. Moreover, fitting between the height enhancement plate and the bottom of the cell (that is, the bottom portion of the casing 2 of the invention), between the height enhancement plates is stable and with an aesthetic appearance. With reference to Figs.12-17, a height enhancement plate 17 has a bottom wall and a pair of sidewalls 19 connected to the bottom wall. A mounting hole 15 is defined in the bottom wall. The pair of the sidewalls 19 is fixed to the bottom portion of the casing 2, thereby realizing height improvement for a first time. Another height enhancement plate 18 with pin construction 16 formed thereon is also provided. The pin construction 16 is inserted into the mounting hole 15 of the height enhancement plate 17, thus obtaining alignment between the height enhancement plate 17 and the height enhancement plate 18. Further, tight fitting is realized between the height enhancement plate 17 and the height enhancement plate 18 which ensures the connection between the plates 17 and 18, thus achieving height improvement for a second time.

## Claims

1. A replaceable and versatile hermetical lead-acid cell comprising:
a top cover; and
a casing;
wherein the top cover has a cap disposed at its top portion; the top cover and the casing are sealed together by resin sealable glue filled therebetween; plural electrode plates, between which dilute sulfuric acid is filled, are positioned in the casing; a divider is placed between every two electrode plates; and four electrode terminal posts are further provided at the top portion of the top cover and are adjacent to four corners of the top cover, and
wherein a first height enhancement plate is disposed at the bottom portion of the casing, the first height enhancement plate comprising a bottom wall and a pair of sidewalls connected to the bottom wall; and a mounting hole is defined in the bottom wall; and the pair of sidewalls is secured with the bottom portion of the casing, and
wherein the bottom portion of the casing has a second height enhancement plate disposed thereon, the second height enhancement plate cooperating with the first height enhancement plate, the second height enhancement plate including a pin construction formed thereon, the pin construction 16 being inserted into the mounting hole of the first height enhancement plate.

2. The replaceable and versatile hermetical lead-acid cell according to claim 1, wherein the four electrode terminal posts include two positive electrode terminal posts and two negative electrode terminal posts.

3. The replaceable and versatile hermetical lead-acid cell according to claim 2, wherein the two positive electrode terminal posts 11 may be disposed at a pair of adjacent corners, while the other two negative electrode terminal posts 11 are disposed at the rest two adjacent corners.

4. The replaceable and versatile hermetical lead-acid cell according to claim 1, wherein every two electrode terminal posts and a copper element form an integral construction and red-black electrode glue is injected into locations around each electrode terminal post.

5. The replaceable and versatile hermetical lead-acid cell according to claim 4, wherein a mounting aperture is defined at each corner of the top cover, and an O-shaped seal ring is disposed into the aperture; a corresponding lead electrode terminal post extends through corresponding mounting aperture and respective seal ring; and regions where the electrode terminal post, the mounting aperture and respective seal ring contact are covered by epoxy sealable glue.

6. The replaceable and versatile hermetical lead-acid cell according to claim 5, wherein the electrode terminal post and the copper element are welded together at a top surface of the top cover with epoxy sealable glue being coated on the welding region.

7. The replaceable and versatile hermetical lead-acid cell according to claim 1, wherein a safety valve is provided into the top cover; and a vent plate is placed on each cap; each electrode terminal post has an L-shaped movable connective terminal stud disposed thereon; the terminal stud includes two tabs which are bended relative each other a certain angle; each tab has a circular hole defined therein.

## Patentansprüche

1. Eine austauschbare und vielseitige verschlossene Bleisäurezelle umfassend:
eine obere Abdeckung und
ein Gehäuse;
wobei die obere Abdeckung einen Deckel hat, der an ihrem oberen Abschnitt angeordnet ist, die obere Abdeckung und das Gehäuse durch einen dazwischen eingefüllten versiegelnden Harzleim miteinander verbunden sind, mehrere Elektrodenplatten, zwischen welchen verdünnte Schwefelsäure eingefüllt ist, im Gehäuse angeordnet sind, eine Unterteilung zwischen jeweils zwei Elektrodenplatten angeordnet ist, und vier Elektrodenanschlussklemmen am oberen Abschnitt der oberen Abdeckung und benachbart zu den vier Ecken der oberen Abdeckung vorgesehen sind; und
wobei eine erste Erhöhungsplatte am unteren Abschnitt des Gehäuses angeordnet ist, wobei die erste Erhöhungsplatte eine Bodenwand und ein Paar Seitenwände, die mit der Bodenwand verbunden sind, umfasst, und wobei ein Montageloch in der Bodenwand definiert ist und das Paar Seitenwände mit dem unteren Abschnitt des Gehäuses gesichert ist; und
wobei der untere Abschnitt des Gehäuses eine zweite daran angeordnete Erhöhungsplatte hat, wobei die zweite Erhöhungsplatte mit der ersten Erhöhungsplatte kooperiert, wobei die zweite Erhöhungsplatte eine darauf ausgebildete Anschlussstiftkonstruktion einschließt, und wobei die Anschlussstiftkonstruktion 16 in das Montageloch der ersten Erhöhungsplatte eingesetzt ist.

2. Die austauschbare und vielseitige verschlossene Bleisäurezelle entsprechend Anspruch 1, wobei die vier Elektrodenanschlussklemmen zwei positive Elektrodenanschlussklemmen und zwei negative Elektrodenanschlussklemmen einschließen.

3. Die austauschbare und vielseitige verschlossene Bleisäurezelle entsprechend Anspruch 2, wobei die zwei positiven Elektrodenanschlussklemmen 11 an einem Paar benachbarter Ecken angeordnet sein können, während die anderen zwei negativen Elektrodenanschlussklemmen 11 an den beiden übrigen benachbarten Ecken angeordnet sind.

4. Die austauschbare und vielseitige verschlossene Bleisäurezelle entsprechend Anspruch 1, wobei jeweils zwei Elektrodenanschlussklemmen und ein Kupferelement eine integrale Konstruktion bilden und rot-schwarzer Elektrodenkleber in die Stellen um jede Elektrodenanschlussklemme herum injiziert ist.

5. Die austauschbare und vielseitige verschlossene Bleisäurezelle entsprechend Anspruch 4, wobei an jeder Ecke der oberen Abdeckung eine Montageöffnung ausgebildet ist, und ein O-förmiger Dichtungsring in der Öffnung angeordnet ist; eine entsprechender Bleielektrodenanschlussklemme sich durch die entsprechende Montageöffnung und den entsprechenden Dichtungsring erstreckt; und die Regionen, an denen die Elektrodenanschlussklemme, die Montageöffnung beziehungsweise der Dichtungsring in Kontakt sind, mit einem versiegelnden Epoxidkleber bedeckt sind.

6. Die austauschbare und vielseitige verschlossene Bleisäurezelle entsprechend Anspruch 5, wobei die Elektrodenanschlussklemme und das Kupferelement an der oberen Oberfläche der oberen Abdeckung mit einem versiegelnden Epoxidkleber zusammengeschweißt sind, der die Schweißregion bedeckt.

7. Die austauschbare und vielseitige verschlossene Bleisäurezelle entsprechend Anspruch 1, wobei ein Sicherheitsventil in der oberen Abdeckung vorgesehen ist und eine Belüftungsplatte an jedem Deckel angeordnet ist; jede Elektrodenanschlussklemme einen L-förmig beweglichen daran angeordneten Anschlussbolzen hat; der Anschlussbolzen zwei Nasen einschließt, die relativ zueinander in einem gewissen Winkel gebogen sind; jede Nase ein ringförmiges Loch hat, das darin definiert ist.

## Revendications

1. Accumulateur hermétique au plomb-acide remplaçable et polyvalent, comprenant :
un couvercle supérieur ; et
un boîtier ;
dans lequel un capot est disposé sur la partie supérieure du couvercle supérieur ; le couvercle supérieur et le boîtier sont scellés l'un à l'autre par une colle résineuse de scellement introduite entre les deux ; plusieurs plaques d'électrodes, entre lesquelles est introduit de l'acide sulfurique dilué, sont positionnées dans le boîtier ; une cloison est placée entre deux électrodes ; et quatre bornes d'électrode se trouvent en outre dans la partie supérieure du couvercle supérieur et sont adjacentes aux quatre coins du couvercle supérieur, et
dans lequel une première plaque de rehaussement est disposée sur la partie inférieure du boîtier, la première plaque de rehaussement comprenant une paroi inférieure et une paire de parois latérales fixées à la paroi inférieure ; et un trou de montage est défini dans la paroi inférieure ; et la paire de parois latérales est fixée à la partie inférieure du boîtier, et
dans lequel une seconde plaque de rehaussement est disposée sur la partie inférieure du boîtier, la seconde plaque de rehaussement coopérant avec la première plaque de rehaussement, une construction de broches étant formée sur la seconde plaque de rehaussement et la construction de broches 16 étant insérée dans le trou de montage de la première plaque de rehaussement.

2. Accumulateur hermétique au plomb-acide remplaçable et polyvalent selon la revendication 1, dans lequel les quatre bornes d'électrode comprennent deux bornes d'électrode positive et deux bornes d'électrode négative.

3. Accumulateur hermétique au plomb-acide remplaçable et polyvalent selon la revendication 2, dans lequel les deux bornes d'électrode positive 11 peuvent être disposées au niveau d'une paire de coins adjacents, tandis que les deux autres bornes d'électrode négative 11 sont disposées au niveau des deux coins adjacents restants.

4. Accumulateur hermétique au plomb-acide remplaçable et polyvalent selon la revendication 1, dans lequel deux bornes d'électrode et un élément en cuivre forment une construction intégrale et une colle pour électrode positive-négative est injectée dans des emplacements se trouvant autour de chaque borne d'électrode.

5. Accumulateur hermétique au plomb-acide remplaçable et polyvalent selon la revendication 4, dans lequel une ouverture de montage est définie dans chaque coin du couvercle supérieur et un joint torique est disposé dans l'ouverture ; une borne d'électrode en plomb correspondante s'étend à travers une ouverture de montage correspondante et un joint respectif; et les régions dans lesquelles la borne d'électrode, l'ouverture de montage et le joint respectif sont en contact, sont recouvertes d'une colle époxy de scellement.

6. Accumulateur hermétique au plomb-acide remplaçable et polyvalent selon la revendication 5, dans lequel la borne d'électrode et l'élément en cuivre sont soudés l'un à l'autre au niveau d'une surface supérieure du couvercle supérieur avec une colle époxy de scellement appliquée sur la région de soudage.

7. Accumulateur hermétique au plomb-acide remplaçable et polyvalent selon la revendication 1, dans lequel une valve de sécurité se trouve dans le couvercle supérieur ; et une plaque d'évacuation d'air est placée sur chaque capot ; une tige de branchement amovible en forme de L est disposée sur chaque borne d'électrode ; la tige de branchement comporte deux languettes pliées l'une par rapport à l'autre selon un certain angle ; un trou circulaire est défini dans chaque languette.
